# EUROPEAN PATENT APPLICATION

(11) **EP 4 033 270 A1**
(43) Date of publication of application: **27.07.2022**
(21) Application number: 21835147.6
(22) Date of filing: 05.07.2021
(51) Int. Cl.: G01S 17/894, G01S 7/486

(54) **LASER RADAR**

(30) Priority: 03.12.2020 CN 202022900737 U
(71) Applicant: Leishen Intelligent System Co., Ltd., Shenzhen, Guangdong 518104 (CN)
(72) Inventor: HU, Xiaobo, Shenzhen, Guangdong 518104 (CN); SHEN, Jian, Shenzhen, Guangdong 518104 (CN)
(74) Representative: Bayramoglu et al.
(86) International application number: PCT/CN2021/104440
(87) International publication number: WO 2022/116534

(57) **Abstract**

The present disclosure disclose a laser radar, including at least one transmitting module and at least one receiving module. The at least one transmitting module is corresponding to the at least one receiving module one by one. The at least one transmitting module is configured to transmit a laser beam to a target area. Each receiving module is configured to receive an echo beam of the laser beam emitted by one corresponding transmitting module and reflected by the target area. Wherein, each receiving module includes at least two receivers.

## Description

### CROSS-REFERENCE TO RELATED APPLICATIONS

The present disclosure claims priority of Chinese Patent Application No. 202022900737.2, filed on December 3, 2020, titled "LASER RADAR", the contents of which are incorporated herein by reference.

### TECHNICAL FIELD

The embodiments of the present disclosure relate to laser radar technologies, and particularly to a laser radar.

### BACKGROUND

With the development and application of laser technologies, laser scanning technologies are increasingly used in a variety of fields such as measurement, transportation, driving assistance, and mobile robots. Laser radars are radar systems that detect the position, velocity, posture and other characteristics of a target by laser. The basic working principle of a laser radar is to first emit a laser beam to a target, then receive a signal reflected back from the target, and compare the received signal with the emitted signal, whereby the distance, azimuth, height, velocity, posture, even shape and other information of the target can be obtained.

When a conventional laser radar scans a target area, a laser beam emitted by a laser transmitter of the laser radar forms a light spot in the target area, and the echo beam reflected by the light spot is received by a receiver of the laser radar, so as to form a target echo, thereby forming a pixel in the point cloud image, where the emission times of the laser beam of the laser transmitter are the same as the receiving times of the receiver. Since one laser transmitter corresponds to one receiver, if the light spot size is not well controlled, the receiver will fail to receive the echo beam completely, affecting the detection accuracy. In addition, because one laser beam can only produce one pixel, to improve the resolution of the laser radar, it is necessary to improve the emission frequency of the laser beam, which increases the power consumption of the laser radar, and complicates the scanning mechanism of the laser radar.

### SUMMARY

According to embodiments of the present disclosure, a laser radar is provided.

The embodiment of the present disclosure provides a laser radar, including at least one transmitting module and at least one receiving module. The at least one transmitting module is corresponding to the at least one receiving module one by one. The at least one transmitting module is configured to transmit a laser beam to a target area. Each receiving module is configured to receive an echo beam of the laser beam emitted by one corresponding transmitting module and reflected by the target area. Each transmitting module includes at least one transmitter, each receiving module includes at least two receivers, and each transmitter of the at least one transmitting module corresponds to the at least two receivers.

In the laser radar of the embodiments of the present disclosure, each receiving module includes at least two receivers corresponding to at least one transmitter, thereby being conducive to completely receiving the echo beam and improving the detection accuracy. In addition, since one receiving module includes at least two receivers, such that one laser beam can generate at least two pixels, thus improving the imaging resolution of the laser radar.

Details of one or more embodiments of the present disclosure are set out in the attached drawings and descriptions below. Other features and advantages of the present disclosure will become apparent from the specification, drawings and claims.

### BRIEF DESCRIPTION OF THE DRAWINGS

To describe the embodiments of the present disclosure or the technical solutions in the prior art more clearly, the following will give a brief introduction to the drawings associated with the embodiments of the present disclosure or the prior art. It is obvious that the drawings in the following description are only intended to illustrate some embodiments of the present disclosure. For those skilled in the art, the drawings of other embodiments can be obtained according to these drawings without any creative work.
FIG. 1 is a schematic diagram of a laser radar in accordance with an embodiment of the present disclosure;
FIG. 2 is a schematic diagram of a receiving module in accordance with an embodiment of the present disclosure;
FIG. 3 is a schematic diagram of a receiving module in accordance with another embodiment of the present disclosure;
FIG. 4 is a schematic view of a light spot formed in a target area by a receiving module in accordance with an embodiment of the present disclosure;
FIG. 5 is a schematic diagram of a receiving module in accordance with still another embodiment of the present disclosure;
FIG. 6 is a schematic diagram of a laser radar in accordance with another embodiment of the present disclosure;
FIG. 7 is a schematic diagram of a laser radar in accordance with still another embodiment of the present disclosure;
FIG. 8 is a schematic diagram of a light spot formed in a target area by the laser radar in FIG. 7;
FIG. 9 is a schematic diagram of a laser radar in accordance with yet another embodiment of the present disclosure;
FIG. 10 is a schematic diagram of a light spot formed in a target area by the laser radar in FIG. 9;
FIG. 11 is a schematic diagram of a laser radar in accordance with still yet another embodiment of the present disclosure; and
FIG. 12 is a schematic view of a light spot formed in a target area by the laser radar in FIG. 11.

### DETAILED DESCRIPTION

The present disclosure will further be described clearly below with reference to the drawings and the embodiments. It should be understood that, the described embodiments are only intended to interpret the present disclosure, and are not to limit the present disclosure. In addition, it should be noted that for the convenience of description, only some but not all structures related to the present disclosure are shown in the drawings.

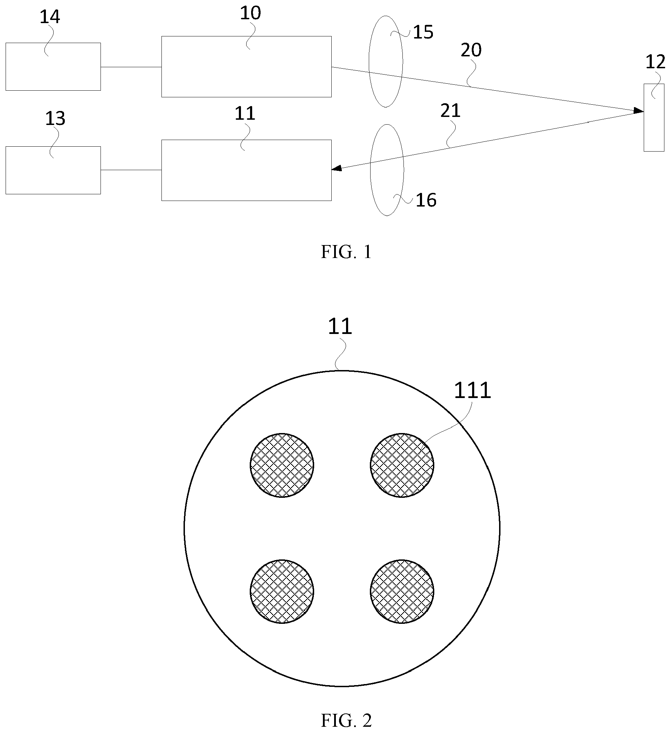

FIG. 1 is a schematic diagram of a laser radar of the embodiment of the present disclosure, and FIG. 2 is a schematic diagram of a receiving module of the embodiment of the present disclosure. As shown in FIGS. 1 and 2, the laser radar of the present disclosure includes at least one transmitting module 10 and at least one receiving module 11, and the at least one transmitting module 10 corresponds to the at least one receiving module 11 one by one. The at least one transmitting module 10 is configured to transmit a laser beam 20 to a target area 12, and each receiving module 11 is configured to receive an echo beam 21 of the laser beam 20 emitted by one corresponding transmitting module 10 and reflected by the target area 12. Wherein the at least one transmitting module 10 includes at least one transmitter, and the at least one receiving module 11 includes at least two receivers 111; and each transmitter of the at least one transmitting module 10 corresponds to at least two receivers 111 of one corresponding receiving module 11.

Specifically, the laser radar includes one transmitting module 10 and one receiving module 11, and the transmitting module 10 includes one transmitter to form a single-line laser radar, or the laser radar includes a plurality of transmitting modules 10 and a plurality of receiving modules 11 corresponding to the plurality of transmitting modules 10 one by one, or one transmitting module 10 includes a plurality of transmitters to form a multi-line laser radar. As shown in FIGS. 1 and 2, taking the laser radar includes one transmitting module 10 and one receiving module 11, and the transmitting module 10 includes one transmitter as an example; the one transmitter of the transmitting module 10 transmits a laser beam 20 to a target area 12, the laser beam 20 is reflected by the target area 12 to form an echo beam 21, and the receiving module 11 is configured to receive the echo beam 21. Thereafter, the received echo beam 21 is compared with the emitted laser beam 20 and the results are properly processed, to generate the relevant information of the target area 12, such as the distance, azimuth, height, speed, posture, and even shape of the target in the target area 12, and then the target can be detected, tracked and identified.

The receiving module 11 includes at least two receivers 111, and one transmitter of the transmitting module 10 corresponds to the at least two receivers 111. Specifically, the one transmitter of the transmitting module 10 transmits a laser beam 20 to a target area 12. The laser beam 20 is reflected by the target area 12 to form an echo beam 21. The at least two receivers 111 of the receiving module 11 corresponding to the transmitter receive the echo beam 21 simultaneously to increase the receiving area of the receiving module 11, which is conducive to fully receiving the echo beam 21 thus improving the detection accuracy. Moreover, since one receiving module 11 includes at least two receivers 111, one laser beam 20 can generate at least two pixels, which not only improves the detection accuracy but also improve the resolution.

Optionally, the receiving module 11 includes two receivers 111 or a plurality of receivers 111. Those skilled in the art can decide the number of the receivers 111 in the receiving module 11 as needed. In general, the more the number of the receivers 111 of the receiving module 11, the higher the detection resolution of the laser radar. The number of the receivers is not limited in the present disclosure.

As an example, as shown in FIGS. 1 and 2, taking the receiving module 11 includes four receivers 111 as an example; the transmitting module 10 transmits a laser beam 20 to the target area 12, and the laser beam 20 is reflected by the target area 12 to form an echo beam 21. The echo beam 21 formed by the reflection of the laser beam 20 on the target area 12 is divided into four parts which are received respectively by the four receivers 111 simultaneously. Compared with the receiving module 11 including only one receiver 111, the receiving area of the receiving module 11 is increased by four times. Thus, the echo beam 21 is fully received and the detection accuracy is improved. Moreover, the four receivers 111 receive the echo beam 21 at the same time, such that one laser beam 20 can generate four pixels, which improves the resolution by four times, whereby the laser radar can reflect the state of the target area 12 more accurately.

In the laser radar provided by the embodiments of the present disclosure, the receiving module 11 includes at least two receivers 111, thus improving the receiving area of the receiving module 11, which is conducive to completely receiving the echo beam 21, thereby improving the detection accuracy. In addition, one receiving module 11 includes at least two receivers 111, such that one laser beam 20 can generate at least two pixels, thus improving the imaging resolution of the laser radar.

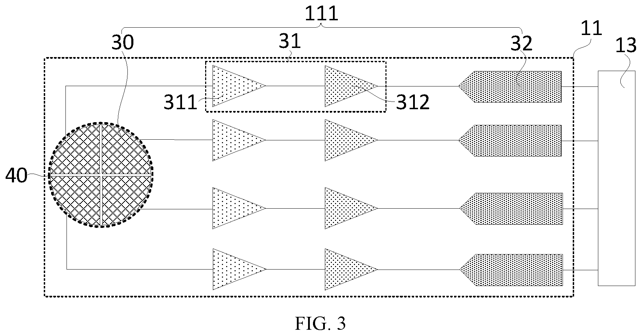

FIG. 3 is a schematic diagram of another receiving module provided by the embodiments of the present disclosure. As shown in FIG. 3, optionally, the receiver 111 includes a photoelectric conversion unit 30, an amplification unit 31, and a sampling unit 32. The amplification unit 31 is electrically connected to the photoelectric conversion unit 30 and the sampling unit 32. The photoelectric conversion unit 30 is configured to convert the received echo beam 21 into an electric signal; the amplification unit 31 is configured to amplify the electric signal; the sampling unit 32 is configured to sample the electric signal amplified by the amplification unit 31 to generate a sampling signal; and the laser radar provided by the embodiments of the present disclosure further includes a data processing module 13; the data processing module 13 is electrically connected to the sampling unit 32, and is configured to process the sampling signal to generate point cloud data.

As an example, as shown in FIG. 3, taking the receiving module 11 includes four receivers 111 as an example; the transmitting module 10 transmits a laser beam 20 to the target area 12, and the laser beam 20 is reflected by the target area 12 to form an echo beam 21. The laser beam 20 transmitted by each transmitting module 10 is simultaneously received by the four receivers 111 in the corresponding receiving module 11, and then four signals are generated by the four receivers 111 and are processed independently. Specifically, in each receiver 111, the photoelectric conversion unit 30 receives part of the echo beam 21 and converts the received echo beam 21 into an electric signal. The amplification unit 31 amplifies the electric signal, so as to enhance the signal strength. The sampling unit 32 is configured to sample the electric signal amplified by the amplification unit 31. The sampled electric signal is processed through an algorithm by the data processing module 13, so as to generate point cloud data and . Thus, the pixels are formed in the point cloud image and the relevant information of the target area 12 is obtained. Based on the above principle, the four receivers 111 can form four pixels in the point cloud image, which improves the resolution by four times, such that the laser radar can reflect the state of the target area 12 more accurately.

Optionally, the sampling unit 32 can be an analog-to-digital converter (ADC) or other analog signal analysis devices, which is not limited in the embodiment of the present disclosure.

Optionally, the photoelectric conversion unit 30 includes an avalanche photodiode (APD).

Specifically, the avalanche photodiode (APD) is a highly sensitive detector that multiplies photocurrent by using avalanche multiplication effect, with advantages of ultra-low noise, high speed and high mutual impedance gain.

In other embodiments, the photoelectric conversion unit 30 can adopt single photon avalanche diode, PIN photodiode and other photodiodes. Those skilled in the art can select the photoelectric conversion unit according to actual needs, which is not limited in the embodiments of the present disclosure.

Continuing to refer to FIG. 3, optionally, the amplification unit 31 includes a trans-impedance amplifier (TIA) 311 and a secondary amplifier 312. The trans-impedance amplifier 311 is electrically connected to the photoelectric conversion unit 30 and the secondary amplifier 312, and the secondary amplifier 312 is electrically connected to the sampling unit 32.

The trans-impedance amplifier (TIA) 311 has the advantage of high bandwidth and can function as a high-speed circuit. The trans-impedance amplifier 311 amplifies the electric signal from the photoelectric conversion unit 30, and the secondary amplifier 312 further amplifies the electric signal from the trans-impedance amplifier 311, thereby further enhancing the signal strength.

It should be noted that the receiver 111 may also include a circuit device other than the photoelectric conversion unit 30, the amplification unit 31 and the sampling unit 32. For example, the receiver 111 includes a filter circuit configured to filter the electric signal. Those skilled in the art can decide the selection according to the actual needs, which is not limited by the embodiment of the present disclosure.

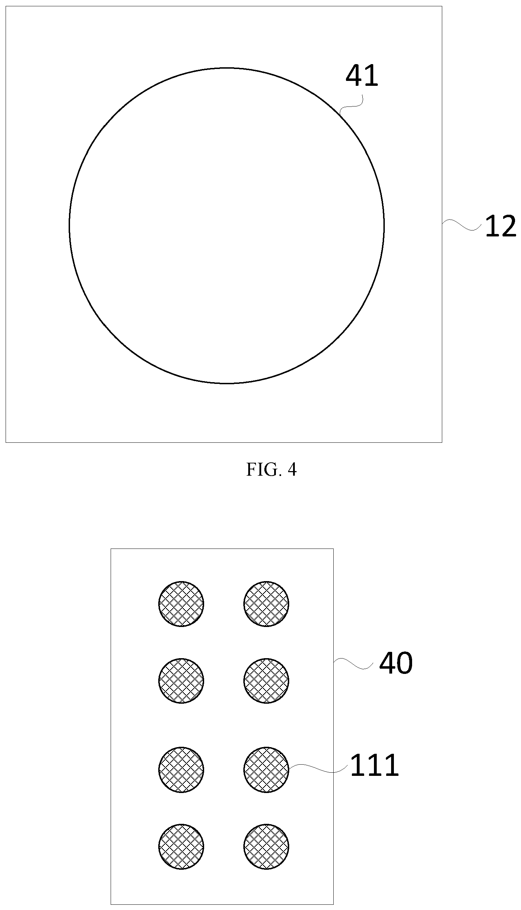

FIG. 4 is a schematic view of a light spot provided by the embodiments of the present disclosure. As shown in FIGS. 3 and 4, optionally, in each receiving module 11, at least two receivers 111 are arranged in an array to form a receiver array 40; the laser beam 20 emitted by the transmitting module 10 forms a light spot 41 in the target area 12; and the shape of the receiver array 40 is the same as the shape of the light spot 41.

As an example, in FIGS. 3 and 4, taking the receiving module 11 includes four receivers 111 as an example, and the four receivers 111 form a receiver array 40. If the light spot 41 formed by the laser beam 20 emitted from the transmitting module 10 in the target area 12 is circular, the shape of the receiver array 40 is also circular, which is conducive to fully receiving the echo beam 21 and improve the detection accuracy.

In other embodiments, the light spot formed by the laser beam 20 emitted from the transmitting module 10 in the target area 12 can also be square, rectangular, oval and other arbitrary shapes, and the wavelength of the laser beam 20 emitted by the transmitting module 10 can also be set as needed. For example, the laser beam 20 emitted by the transmitting module 10 can have a wavelength of 1550 nm and forms a circular light spot; or, the laser beam 20 emitted by the transmitting module 10 can have a wavelength of 905 nm and forms a long light spot. Accordingly, the shape of the receiver array 40 is designed to be the same as the shape of the light spot, such that the echo beam 21 are fully received. The number of the receivers 111 in the receiver array 40 can also be set according to the shape of the light spot.

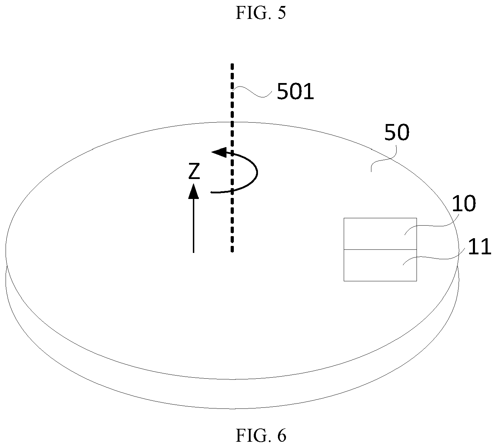

For example, FIG. 5 is a schematic diagram of still another receiving module provided by the embodiments of the present disclosure. As shown in FIG. 5, if the laser beam 20 emitted by the transmitting module 10 has a wavelength of 905 nm and forms a long spot, the receiving module 11 can be designed to include eight receivers 111 configured to form a rectangular receiver array 40, so as to fully receive the echo beam 21 to improve the detection accuracy. In other embodiments, those skilled in the art can design the receiver array 40 according to the actual situation, which is not limited in the embodiments of the present disclosure.

FIG. 6 is a schematic diagram of another laser radar provided by the embodiments of the present disclosure. As shown in FIG. 6, optically, the laser radar provided by the embodiments of the present disclosure further includes a rotating mechanism 50; the transmitting module 10 and the receiving module 11 are fixedly connected to the rotating mechanism 50; and the rotating mechanism 50 is configured to drive the transmitting module 10 and the receiving module 11 to rotate around the rotating axis 501 of the rotating mechanism 50.

Specifically, as shown in FIG. 6, the rotating mechanism 50 rotates around the rotating axis 501, and the transmitting module 10 and the receiving module 11 perform the scanning and detection functions in the direction perpendicular to the rotating axis 501 with the rotation of the rotating mechanism 50.

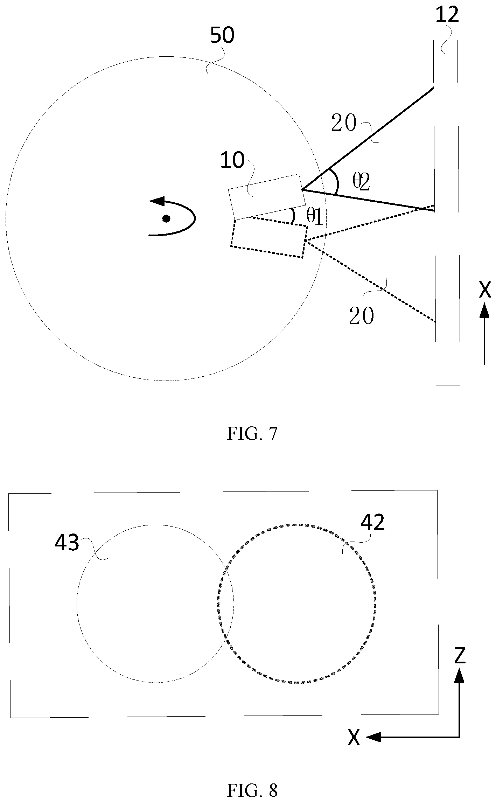

FIG. 7 is a schematic diagram of yet another laser radar provided by the embodiments of the present disclosure. FIG. 8 is a schematic diagram of a light spot formed by the laser radar provided by the embodiments of the present disclosure in a target area. As shown in FIGS. 6-8, optionally, the laser radar provided by the embodiments of the present disclosure includes one transmitting module 10; the one transmitting module 10 is configured to emit the laser beam 20 in a fixed transmitting cycle; the rotation angle of the rotating mechanism 50 in one fixed transmitting cycle is θ1, and the beam divergence angle of the laser beam 20 emitted by the one transmitting module 10 along a first direction X is θ2, where θ1 is less than or equal to θ2, and the first direction X is perpendicular to an extension direction Z of the rotating axis 501.

Specifically, the rotation angle θ1 of the rotating mechanism 50 in one fixed transmitting cycle is less than or equal to the beam divergence angle θ2 of the laser beam 20 from the transmitting module 10 in the first direction X, such that there is an overlapping area between the light spots formed by the transmitting module 10 in the adjacent fixed transmitting cycles, thus ensuring that all areas within the target area 12 can be detected.

For example, as shown in FIGS. 6-8, the transmitting module 10 is configured to emit the laser beam 20 in a fixed transmitting cycle, and the rotating mechanism 50 drives the transmitting module 10 to rotate around the rotating axis 501. The laser beam 20 emitted by the transmitting module 10 in one fixed transmitting cycle forms a first light spot 42 in the target area 12 (as shown by the dotted line in FIG. 7 and FIG. 8). In the next fixed transmitting cycle, the rotating mechanism 50 drives the transmitting module 10 to rotate around the rotating axis 501 by θ1 degree, and the laser beam 20 emitted by the transmitting module 10 forms a second light spot 43 in the target area 12 (as shown by the solid line in FIG. 7 and FIG. 8); because the rotation angle θ1 of the rotating mechanism 50 in one fixed transmitting cycle is less than the beam divergence angle θ2 of the laser beam 20 emitted from the transmitting module 10 in the first direction X, there is an overlapping area between the first light spot 42 and the second light spot 43. Thus, with the rotation of the rotating mechanism 50, all areas in the target area 12 are detected.

Optionally, the extension direction Z of the rotation axis 501 and the first direction X can be set according to the actual needs. For example, the extension direction Z of the rotation axis 501 is a vertical direction and the first direction X is a horizontal direction; or, the extension direction Z of the rotating axis 501 is a horizontal direction, and the first direction X is a vertical direction, which is not limited by the embodiments of the present disclosure.

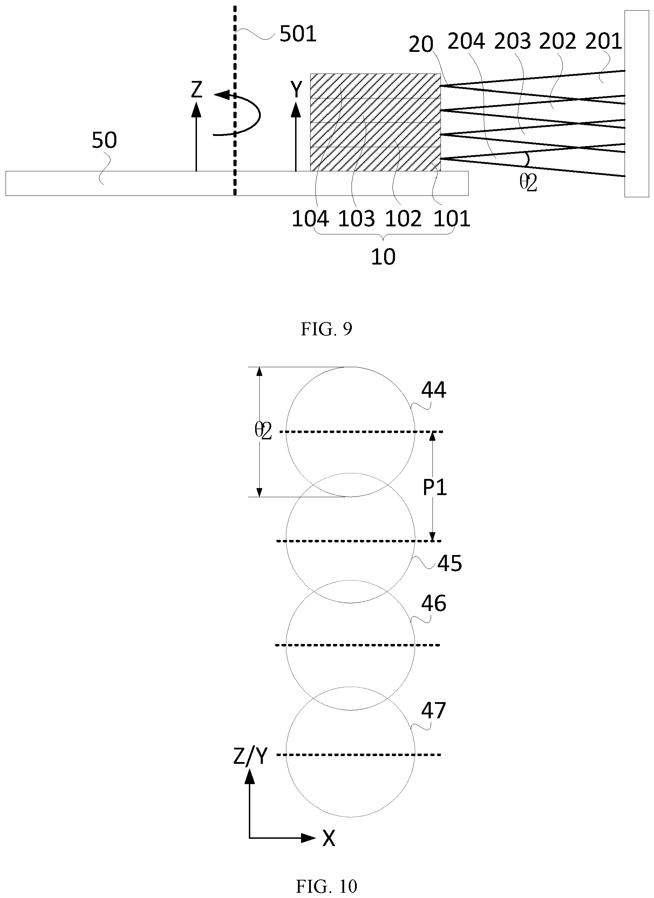

FIG. 9 is a schematic diagram of still yet another laser radar provided by the embodiments of the present disclosure. As shown in FIG. 9, optionally, the laser radar provided by the embodiments of the present disclosure includes a plurality of transmitting modules 10 arranged in a second direction Y, and the second direction Y is parallel to the extension direction Z of the rotating axis 501.

Specifically, by arranging the plurality of transmitting modules 10 along the second direction Y, a multi-line laser radar is realized, such that the height information of an object is acquired, and the 3D scanning map of the surrounding environment is obtained, thus improving the detection range of the laser radar. By driving the transmitting module 10 to rotate around the rotating shaft 501 through the rotating mechanism 50, a wide range of scanning detection is achieved.

Continuing to refer to FIG. 9, optionally, the laser beam 20 emitted by each transmitting module 10 covers a corresponding scanning range, and the scanning ranges of two neighboring transmitting modules 10 are different and overlapping with each other.

Because the scanning ranges of two neighboring transmitting modules 10 are different and overlapping with each other, on the one hand, the scanning range is increased, on the other hand, all areas in the target area 12 can be detected.

FIG. 10 is a schematic diagram of a light spot formed in a target area by the laser radar provided by the embodiments of the present disclosure. For example, as shown in FIGS. 9 and 10, taking the laser radar includes four transmitting modules 10 as an example, the four transmitting modules 10 include a first transmitting module 101, a second transmitting module 102, a third transmitting module 103, and a fourth transmitting module 104. The first transmitting module 101 covers a first scanning range 201; the second transmitting module 102 covers a second scanning range 202; the third transmitting module 103 covers a third scanning range 203; and the fourth transmitting module 104 covers a fourth scanning range 204. Because the scanning ranges of two neighboring transmitting modules 10 are different and overlapping with each other, such that there is a first overlapping area between the third light spot 44 formed in the target area 12 by the laser beam 20 emitted by the first transmitting module 101 and the fourth light spot 45 formed in the target area 12 by the laser beam 20 emitted by the second transmitting module 102; there is a second overlapping area between the fourth light spot 45 formed in the target area 12 by the laser beam 20 emitted by the second transmitting module 102 and the fifth light spot 46 formed in the target area 12 by the laser beam 20 emitted by the third transmitting module 103; and there is a third overlapping area between the fifth light spot 46 formed in the target area 12 by the laser beam 20 emitted by the third transmitting module 103 and the sixth light spot 47 formed in the target area 12 by the laser beam 20 emitted by the fourth transmitting module 104; that is to say, the light spots formed by the laser beams 20 emitted by two neighboring transmitting modules 10 in the target area 12 are overlapped with each other, thus ensuring the beam divergence angle θ2 of the laser beam 20 emitted by the transmitting module 10 is greater than or equal to the resolution PI of the laser radar in the second direction Y, and thus all areas in the target area 12 can be detected.

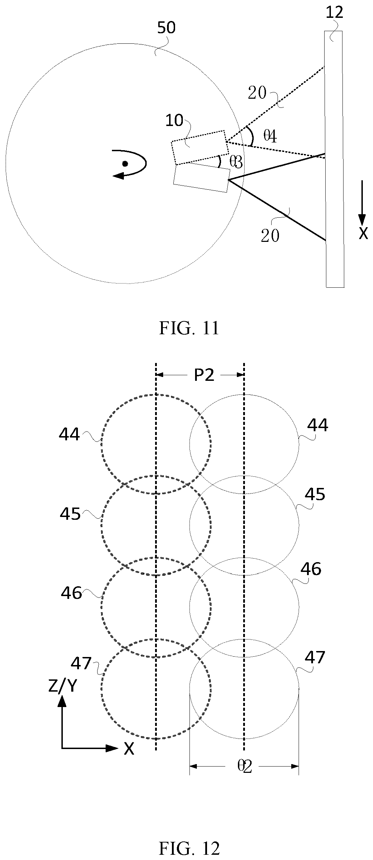

FIG. 11 is a schematic diagram of still yet another laser radar provided by the embodiments of the present disclosure, and FIG. 12 shows a schematic diagram of the light spot formed in a target area by the laser radar provided by the embodiments of the present disclosure. As shown in FIGS. 11 and 12, optionally, the transmitting modules 10 emit the laser beams 20 in a fixed transmitting cycle; the rotation angle of the rotating mechanism 50 in one fixing transmitting cycle is θ3, and the beam divergence angle of the laser beam emitted by each of the transmitting modules along a first direction X is θ4, where θ3 is less than or equal to θ4; and the first direction X is perpendicular to an extension direction Z of the rotating axis 501.

Specifically, the rotation angle θ3 of the rotating mechanism 50 in one fixed transmitting cycle is less than or equal to the beam divergence angle θ4 of the laser beam 20 emitted from the transmitting module 10 in the first direction X, such that there is an overlapping area between the light spots formed by the transmitting module 10 in the adjacent fixed transmitting cycles, thus ensuring that all areas within the target area 12 can be detected.

For example, as shown in FIGS. 9-12, taking the laser radar includes four transmitting modules 10 as an example. The four transmitting modules 10 are configured to emit the laser beams 20 in a fixed transmitting cycle, and the rotating mechanism 50 drives the transmitting modules 10 to rotate around the rotating axis 501. The laser beams 20 emitted by the four transmitting modules 10 in one fixing transmitting cycle form the light spots 44, 45, 46, 47 in the target area 12 (as shown by the dotted line in FIG. 12). In the next fixing transmitting cycle, the rotating mechanism 50 drives the four transmitting modules 10 to rotate around the rotating axis 501 by θ3 degree, and the laser beams 20 emitted by the four transmitting modules 10 form the light spots 44, 45, 46, 47 in the target area 12 (as shown by the solid line in FIG. 12); because the rotation angle θ3 of the rotating mechanism 50 in one fixing transmitting cycle is less than the beam divergence angle θ4 of the laser beams 20 emitted from the transmitting modules 10 in the first direction X, therefore, there are overlapping areas between the light spots 44, 45, 46, 47, thus ensuring the beam divergence angle θ2 of the laser beams 20 emitted by the transmitting modules 10 is greater than or equal to the resolution P2 of the laser radar in the first direction X, and thus all areas in the target area 12 can be detected.

Optionally, continuing to refer to FIG. 1, the laser radar provided by the embodiments of the present disclosure further includes a controller 14, the controller 14 is electrically connected to the at least one transmitting module 10 and configured to control the at least one transmitting module 10 to transmit the laser beam 20 in a fixed transmitting cycle.

Optionally, continuing to refer to FIG. 1, the laser radar provided by the embodiments of the present disclosure further includes a transmitting lens 15 and a receiving lens 16. The transmitting lens 15 is positioned on the propagation path of the laser beam 20 and is configured to collimate and transmit the laser beam 20 to the target area 12; the receiving lens 16 is positioned on the propagation path of the echo beam 21 and is configured to collimate and transmit the echo beam 21 to the receiver 111.

The laser radar provided by the embodiments of the present disclosure may be a mechanical scanning radar or galvanometer scanning radar, etc. The laser radar can also include other devices to realize the functions of laser radar, which is decided by those skilled in the art according to the actual needs, and the embodiment of the present disclosure is not limited to this.

In the laser radar provided by the embodiments of the present disclosure, the receiving module 11 includes at least two receivers 111, thus increasing the receiving area of the receiving module 11, which is conducive to fully receiving the echo beam 21, thus improving the detection accuracy. Moreover, since one receiving module 11 includes at least two receivers 111, one laser beam 20 can generate at least two pixels, thus improving the imaging resolution of the laser radar. In addition, the beam divergence angle θ2 of the laser beam 20 emitted by the transmitting module 10 is greater than or equal to the resolution of the laser radar, and thus all areas in the target area 12 can be detected.

It should be noted that the above description is only the preferred embodiment and the technical principle applied. Those skilled in the art will understand that the present disclosure is not limited to the specific embodiments described herein, and various obvious variations, readjustments and substitutions can be made for those skilled in the art without departing from the protection scope of the present disclosure. Therefore, although the present disclosure has been described in detail through the above embodiments, the present disclosure is not limited to the above embodiments. Without departing from the concept of the present disclosure, it can also include more other equivalent embodiments, and the scope of the present disclosure is determined by the scope of the appended claims.

## Claims

1. A laser radar, comprising at least one transmitting module and at least one receiving module, and the at least one transmitting module corresponding to the at least one receiving module one by one;
wherein the at least one transmitting module is configured to transmit a laser beam to a target area, each receiving module is configured to receive an echo beam of the laser beam emitted by one corresponding transmitting module and reflected by the target area, each transmitting module comprises at least one transmitter, each receiving module comprises at least two receivers, and each transmitter of the at least one transmitting module corresponds to the at least two receivers.

2. The laser radar of claim 1, wherein the at least two receivers each comprise a photoelectric conversion unit, an amplification unit, and a sampling unit;
the amplification unit is electrically connected to the photoelectric conversion unit and the sampling unit;
the photoelectric conversion unit is configured to convert the received echo beam into an electric signal; the amplification unit is configured to amplify the electric signal; the sampling unit is configured to sample the electric signal amplified by the amplification unit to generate a sampling signal; and
the laser radar further comprises a data processing module; the data processing module is electrically connected to the sampling unit, and is configured to process the sampling signal to generate point cloud data.

3. The laser radar of claim 2, wherein the photoelectric conversion unit comprises an avalanche photodiode.

4. The laser radar of claim 2, wherein the amplification unit comprises a trans-impedance amplifier and a secondary amplifier; the trans-impedance amplifier is electrically connected to the photoelectric conversion unit and the secondary amplifier; and the secondary amplifier is electrically connected to the sampling unit.

5. The laser radar of claim 1, wherein in each receiving module, the at least two receivers are arranged in an array to form a receiver array;
the laser beam emitted by the at least one transmitting module forms a light spot in the target area; and
a shape of the receiver array is the same as a shape of the light spot.

6. The laser radar of claim 1, wherein the laser radar further comprises a rotating mechanism; the at least one transmitting module and the at least one receiving module are fixedly connected to the rotating mechanism; and the rotating mechanism is configured to drive the at least one transmitting module and the at least one receiving module to rotate around a rotating axis of the rotating mechanism.

7. The laser radar of claim 6, wherein the laser radar comprises one transmitting module; the one transmitting module is configured to emit the laser beam in a fixed transmitting cycle; a rotation angle of the rotating mechanism in one fixing transmitting cycle is θ1, and a beam divergence angle of the laser beam emitted by the one transmitting module along a first direction is θ2, where θ1 is less than or equal to θ2; and the first direction is perpendicular to an extension direction of the rotating axis.

8. The laser radar of claim 6, wherein the laser radar comprises a plurality of transmitting modules arranged in a second direction, and the second direction is parallel to an extension direction of the rotating axis.

9. The laser radar of claim 8, wherein the laser beam emitted by each transmitting module covers a scanning range, and scanning ranges of two neighboring transmitting modules are different and overlapping with each other.

10. The laser radar of claim 9, wherein each transmitting module is configured to emit the laser beam in a fixed transmitting cycle; a rotation angle of the rotating mechanism in one fixing transmitting cycle is θ3, and a beam divergence angle of the laser beam emitted by each transmitting module along a first direction is θ4, where θ3 is less than or equal to θ4; and the first direction is perpendicular to an extension direction of the rotating axis.
